# EUROPÄISCHE PATENTSCHRIFT

(11) **EP 1 318 088 B1**
(45) Veröffentlichungstag und Bekanntmachung des Hinweises auf die Patenterteilung: **21.04.2004**
(21) Anmeldenummer: 02027201.9
(22) Anmeldetag: 05.12.2002
(51) Int. Cl.: B65G 47/52

(54) **Spannvorrichtung und Umsetzvorrichtung mit einer derartigen Spannvorrichtung**
Tensioner and transferring device comprising same
Tendeur et dispositif de transfert comportant ce tendeur

(30) Priorität: 06.12.2001 DE 10159838
(43) Veröffentlichungstag der Anmeldung: 11.06.2003
(73) Patentinhaber: Bosch Rexroth Aktiengesellschaft, 70173 Stuttgart (DE)
(72) Erfinder: Büsing, Boris, 70186 Stuttgart (DE); Schmid, Thomas, 71638 Ludwigsburg (DE); Leisner, Ernst, 71638 Ludwigsburg (DE)
(74) Vertreter: Herzog, Markus, Dipl.-Phys. Dr.

(56) Entgegenhaltungen:
- DE-A- 3 012 355
- DE-A- 4 124 763
- DE-A- 19 603 554
- DE-C- 4 439 106
- US-A- 3 067 851

## Beschreibung

Die Erfindung betrifft eine Vorrichtung zum Spannen wenigstens zweier im Wesentlichen längeninvarianter Riemen, wobei ein erster Riemen um eine erste Achse herumgeführt ist, welche wiederholt eine Stellbewegung in einer zur Achsrichtung der ersten Achse im Wesentlichen orthogonal verlaufenden Stellrichtung ausführt, und wobei der erste Riemen und ein zweiter Riemen um eine gemeinsame zweite Achse herumgeführt sind, wobei die Vorspannrichtungen des ersten Riemens und des zweiten Riemens im Bereich der zweiten Achse einen von 0° und 180° verschiedenen Winkel miteinander einschließen.

Wenn im Zusammenhang mit der vorliegenden Erfindung von "im Wesentlichen längeninvarianten Riemen" die Rede ist, so soll hiermit gemeint sein, dass die Riemen auf eine auf sie einwirkende äußere Kraft praktisch nicht durch eine Längenänderung reagieren können, wie dies beispielsweise bei herkömmlichen Polyurethan-Riemen der Fall ist. Selbstverständlich ist aber klar, dass jedes noch so längeninvariante bzw. starre Material eine gewisse Dehnbarkeit aufweist. Diese geringfügige Dehnbarkeit steht aber nicht im Widerspruch dazu, dass dieses Material im Rahmen der vorliegenden Erfindung als im Wesentlichen längeninvariant betrachtet wird.

Wenn ferner davon die Rede ist, dass ein Riemen "um eine Achse herumgeführt" ist, so wird hierunter auch verstanden, dass der Riemen um eine Riemenscheibe bzw. ein Ritzel herumgeführt ist, welches auf einer starren Achse drehbar bzw. auf einer drehbaren Welle starr befestigt ist. Es soll damit aber auch der Fall erfasst sein, dass der Riemen um eine Mehrzahl, beispielsweise aufgrund gemeinsamer Bewegung, zusammengehöriger Achsen herumgeführt ist.

Schließlich wird unter der Vorspannrichtung der ersten und zweiten Riemen die Wirkungsrichtung der jeweiligen Vorspannkraft verstanden, die diese Riemen auf die zweite Achse ausüben.

Eine gattungsgemäße Spannvorrichtung findet beispielsweise in der von der Bosch GmbH unter der Bezeichnung HQ2/S vertriebenen Hub-Quereinheit Verwendung.

Derartige Hub-Quereinheiten, wie sie beispielsweise aus der DE 30 12 355 A1, der DE 196 03 554 A1 und der DE 41 24 763 A1 bekannt sind, dienen in einem Fördersystem für Werkstücke bzw. Werkstückträger dazu, die auf einer ersten Förderstrecke transportierten Werkstücke bzw. Werkstückträger anzuhalten, von den Fördermitteln der ersten Förderstrecke abzuheben und an eine zur ersten Förderstrecke meist orthogonal verlaufende zweite Förderstrecke zu übergeben. Die Hub-Quereinheit umfasst eine Hubeinheit mit integriertem Hubgerät, beispielsweise einem Pneumatikzylinder, und einer oder mehreren Führungsstangen. Mit einem Stellelement des Kraftgeräts, beispielsweise der Kolbenstange des Pneumatikzylinders, und den Führungsstangen ist eine Hubplatte fest verbunden, an der eine Mehrzahl von Achsen zur Lagerung von Umlenkrollen für Stellriemen vorgesehen sind. Diese Achsen bilden zusammen "eine erste Achse" im Sinne der vorliegenden Erfindung. Mittels der Stellriemen wird das Werkstück bzw. der Werkstückträger nach dem Abheben von der ersten Förderstrecke an die zweite Förderstrecke übergeben. Zum Antrieb der Stellriemen sind diese um eine weitere Achse herumgeführt, um die auch ein Antriebsriemen herumgeführt ist, der seinerseits von einem Getriebemotor oder dergleichen angetrieben ist.

Bei der Hub-Quereinheit HQ2/S macht auch die gemeinsame Achse von Stellriemen und Antriebsriemen die Hubbewegung mit, so dass sich in Folge dieser Hubbewegung zwar die Spannung der Stellriemen nicht ändert, wohl aber die Spannung des Antriebsriemens. Es ist daher eine Spannvorrichtung in Form von Spannrollen vorgesehen, die bei der Montage der Gesamtvorrichtung eingestellt werden. Die Längenänderung an den Riemen wird dabei nicht ausgeglichen, d.h. die Spannung ist je nach Hubstellung unterschiedlich. Bei Verwendung einer zusätzlichen, federnd gelagerten Spannrolle kann die Riemenspannung im Wesentlichen konstant gehalten werden.

Ergänzend sei noch auf eine weitere Hub-Quereinheit der Bosch GmbH verwiesen, nämlich die Hub-Quereinheit HQ1/O. Bei dieser ist der Antriebsriemen von einer Rundschnur aus Polyurethan gebildet, so dass er auf die Hubbewegung sowie auf Fertigungs- und Montagetoleranzen durch eine elastische Dehnung, d.h. durch eine Längenänderung reagieren kann.

Demgegenüber ist es Aufgabe der Erfindung, eine Spannvorrichtung, insbesondere für eine Vorrichtung zum Umsetzen von Werkstücken bzw. Werstückträgern, anzugeben, welche es trotz ortsfester Montage eines Antriebsmotors der Riemen auch bei Einsatz von im Wesentlichen längeninvarianten Riemen ermöglicht, dass sich die Vorspannung der Riemen auch im Zuge der Stellbewegung des ersten Riemens im Wesentlichen nicht ändert.

Diese Aufgabe wird erfindungsgemäß durch eine Spannvorrichtung der eingangs genannten Art gelöst, bei welcher der zweiten Achse eine Federeinheit zugeordnet ist, welche sie im Sinne des Spannens des ersten Riemens und des zweiten Riemens vorspannt und welche bei einer Stellbewegung der ersten Achse eine Ausgleichsbewegung der zweiten Achse aus den durch die Achsrichtung der zweiten Achse mit den Vorspannrichtungen des ersten Riemens und des zweiten Riemens jeweils vor Beginn der Stellbewegung aufgespannten Ebenen heraus zulässt. Durch die erfindungsgemäße Ausgleichsbewegung kann sowohl der Abstand der ersten Achse von der zweiten Achse als auch der Abstand der zweiten Achse von der Antriebsachse des zweiten Riemens im Wesentlichen konstant gehalten werden. Dies führt unter Berücksichtigung der Längeninvarianz der Riemen dazu, dass die Vorspannung der Riemen im Wesentlichen konstant gehalten werden kann. Nur dann, wenn die Verlagerung der zweiten Achse eine Änderung der Vorspannkraft der Federeinheit nach sich zieht, ergibt sich auch eine geringfügige Änderung der Vorspannung der Riemen. Die Änderung der Vorspannkraft der Federeinheit kann beispielsweise durch Verwendung einer vorgespannten Schraubenfeder, sei es eine Schraubendruckfeder oder eine Schraubenzugfeder, oder einer Gasfeder mit bezogen auf den Gesamtdurchmesser des Kolbens vergleichsweise dünner Kolbenstange minimal gehalten werden.

Ein weiterer Vorteil der Erfindung ist in der Vereinfachung des Aufbaus der Spannvorrichtung und somit der gesamten Umsetzvorrichtung zu sehen, die dadurch erzielt werden kann, dass erfindungsgemäß auf den Einsatz einer zusätzlichen Spannrolle verzichtet werden kann.

In Weiterbildung der Erfindung wird vorgeschlagen, dass die erste Achse (bzw. die Mehrzahl erster Achsen) an einem relativ zu einer Basiseinheit verstellbaren Rahmen gelagert ist, und dass die zweite Achse (bzw. die Mehrzahl zweiter Achsen) an einem Träger gelagert ist, der an dem Rahmen relativ zu diesem verlagerbar geführt ist, wobei sich die Federeinheit einenends an dem Rahmen und andernends an dem Träger abstützt. Dies ermöglicht eine besonders kompakte und somit raumsparende Konstruktion nicht nur der Spannvorrichtung, sondern der gesamten Umsetzvorrichtung. Grundsätzlich ist es jedoch auch möglich, den Träger an der Antriebsachse des zweiten Riemens bzw. dem Gehäuse des Antriebsmotors für den zweiten Riemen oder alternativ an der Basiseinheit führbar zu lagern.

Für eine einfache und kostengünstige Konstruktion kann dadurch gesorgt werden, dass eine an dem Rahmen befestigbare bzw. befestigte Grundplatte der Spannvorrichtung oder/und der Träger aus Blech, vorzugsweise Metallblech, gefertigt ist. Insbesondere kann die Grundplatte oder/und der Träger als gestanztes oder geschnittenes (beispielsweise mittels eines Lasers) und gewünschtenfalls gebogenes Blechteil ausgebildet sein.

Zur Erleichterung des Auswechselns der ersten und zweiten Riemen kann vorgesehen sein, dass wenigstens ein Lager der zweiten Achse als einseitig offene Ausnehmung ausgebildet ist. Im normalen Betrieb kann dabei das Herausfallen der zweiten Achse aus diesem Lager durch die Vorspannung des ersten Riemens oder/und durch die Vorspannung des zweiten Riemens verhindert werden, und dies in einfacher Weise durch entsprechende Orientierung der offenen Seite der Ausnehmung. Insbesondere ist wenigstens eine der Begrenzungsflächen der Ausnehmung derart orientiert, dass sie unter Berücksichtigung der Wirkungsrichtung der Vorspannkraft des jeweils betrachteten Riemens (= Vorspannrichtung des Riemens) als Einweisungsschräge für die zweite Achse in die Ausnehmung hinein wirkt.

Zur Realisierung der Führung der zweiten Achse relativ zu dem Rahmen kann an einem der Teile, Grundplatte oder Träger, wenigstens eine Führungsleiste und am jeweils anderen Teil, Träger oder Grundplatte, jeweils eine zugehörige Führungsausnehmung vorgesehen sein. Insbesondere bei der Blechausführung von Grundplatte oder/und Träger kann die wenigstens eine Führungsleiste durch Umbiegen eines Blechstegs hergestellt sein. Bereits im einfachsten Fall, bei welchem die Ausgleichsbewegung der zweiten Achse in einer Schwenkbewegung um die Antriebsachse des zweiten Riemens besteht, kann diese Ausgleichsbewegung nicht durch eine einfache lineare Führung verwirklicht werden, ohne die Gefahr eines Verkantens oder anderweitigen Blockierens des Trägers an der Grundplatte heraufzubeschwören. Zur Vereinfachung der Ausgestaltung der Führungsmittel, Führungsleiste und Führungsausnehmung, wird daher vorgeschlagen, dass die Führungsleiste im Wesentlichen orthogonal zur Vorspannrichtung des zweiten Riemens vor Beginn der Stellbewegung verläuft, und dass die Führungsausnehmung bezüglich der Abmessungen der sie durchsetzenden Führungsleiste mit so großem Übermaß bemessen ist, dass der Träger um eine zur zweiten Achse im Wesentlichen parallel verlaufende Achse verschwenkbar ist.

Die Riemen können zur Erzielung der Längeninvarianz vorzugsweise eine Einlage aus zugfestem Material aufweisen, beispielsweise eine Einlage aus zugfestem Glasfaser-Material, zugfesten Kunststoff-Fasern oder Metall-, insbesondere Stahldrähten. Aber nicht nur diese längeninvariante Ausbildung, sondern auch die Ausbildung der Riemen als Zahnriemen kann neben der Haltbarkeit der Riemen auch die Präzision der Bewegung der ersten Riemen verbessern.

Zur Erleichterung der Montage oder/und Demontage der ersten und zweiten Riemen, der Spannvorrichtung als Ganzes, aber auch der Grundplatte oder/und des Trägers als Einzelteile der Spannvorrichtung wird vorgeschlagen, dass an der Grundplatte oder/und dem Träger ein Haltedorn zum Halten der Schraubenfeder vorgesehen ist oder/und dass an der Grundplatte oder/und dem Träger wenigstens ein Anschlag zur Begrenzung der Relativbewegung zwischen Grundplatte und Träger vorgesehen ist.

Um schließlich gewährleisten zu können, dass die Vorspannkraft aller Riemen im Wesentlichen gleich groß ist, wird in Weiterbildung der Erfindung vorgeschlagen, dass die Lage des Angriffs der Federeinheit am Träger relativ zur Lage der zweiten Achse unter Berücksichtigung der Vorspannrichtungen der ersten Riemen und der zweiten Riemen und entsprechend der Anzahl erster Riemen und der Anzahl zweiter Riemen gewählt ist. Nach Montage der Spannvorrichtung sowie der Riemen stellt sich ein stationärer Zustand ein, in welchem die Vorspannung der ersten Riemen auf den Träger ein Drehmoment ausübt, welches den von der Vorspannung der zweiten Riemen auf den Träger ausgeübten Drehmoment entgegengesetzt gerichtet, zu diesem aber betragsmäßig gleich groß ist. Sollen alle Riemen mit im Wesentlichen der gleichen Vorspannkraft betrieben werden, so muss der Hebelarm der Übersetzung der Vorspannkraft aller Riemen einer betrachteten Sorte (erste Riemen oder zweite Riemen) ausgehend von einer Situation mit nur einem einzigen solchen Riemen umgekehrt proportional zur Anzahl der Riemen dieser Sorte gewählt werden. Bei einer Spannvorrichtung für zwei erste Riemen und einen zweiten Riemen muss der Hebelarm der ersten Riemen also halb so groß gewählt werden wie der Hebelarm der zweiten Riemen.

Gemäß einem weiteren Gesichtspunkt betrifft die Erfindung ferner eine Vorrichtung zum Umsetzen von Werkstücken bzw. Werkstückträgern mit einer erfindungsgemäßen Spannvorrichtung.

Die Erfindung wird im Folgenden an Hand der beigefügten Zeichnungen an einem Ausführungsbeispiel näher erläutert werden. Es stellt dar:
- Fig. 1: eine perspektivische Ansicht einer Umsetzvorrichtung, die mit einer erfindungsgemäßen Spannvorrichtung ausgestattet ist;
- Fig. 2: eine schematische Seitenansicht des Trägers der erfindungsgemäßen Spannvorrichtung zur Erläuterung der an diesem Träger angreifenden Kräfte; und
- Fig. 3: eine schematische Darstellung des Verlaufs der ersten und zweiten Riemen zur Erläuterung des grundlegenden Funktionsprinzips der erfindungsgemäßen Spannvorrichtung.

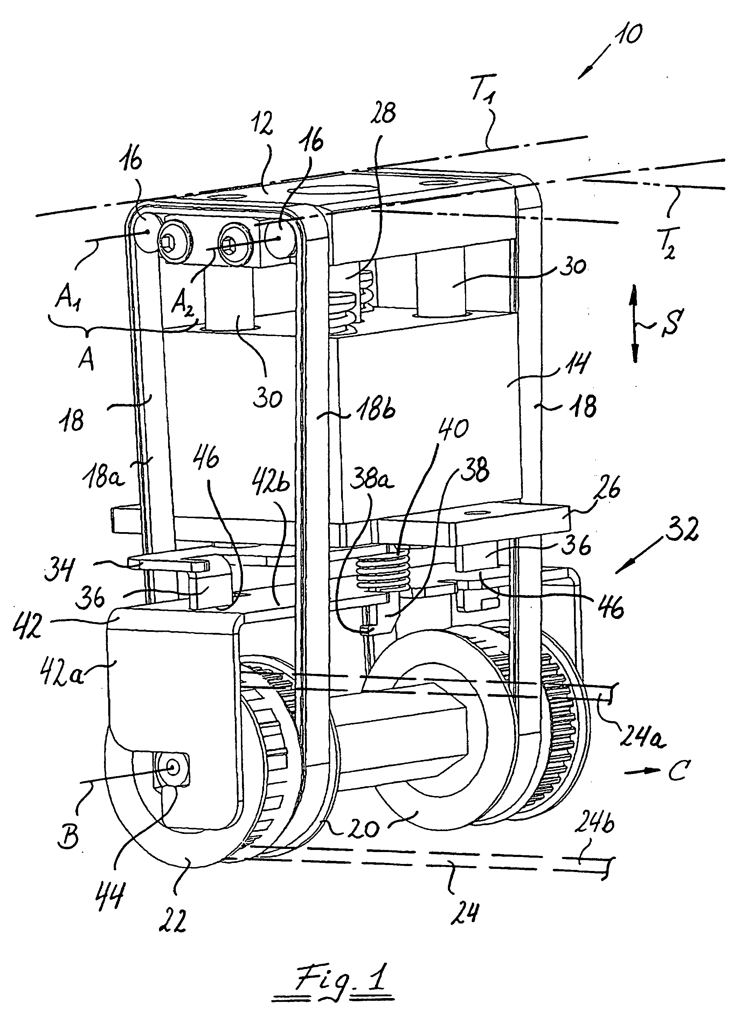

In Fig. 1 ist eine erfindungsgemäße Umsetzvorrichtung ganz allgemein mit 10 bezeichnet. Derartige Umsetzvorrichtungen sind im Stand der Technik bekannt und sollen daher hier nicht detailliert beschrieben werden. Die Umsetzvorrichtung 10 dient zum Umsetzen von Werkstücken bzw. Werkstückträgern von einer ersten Förderstrecke T₁ auf eine zweite Förderstrecke T₂. Die Transportriemen der ersten Förderstrecke T₁ sind in Fig. 1 strich-punktiert und jene der zweiten Förderstrecke T₂ strich-punktpunktiert angedeutet.

Die Umsetzvorrichtung 10 umfasst eine Hubplatte 12, welche mittels einer Hubvorrichtung 14, beispielsweise eines Pneumatikzylinders, in Stellrichtung S verlagert, insbesondere angehoben und abgesenkt, werden kann. Auf diese Weise können die Werkstücke bzw. Werkstückträger außer Eingriff mit den Transportbändern der ersten Förderstrecke T₁ gebracht werden. An der Hubplatte 12 sind Umlenkrollen 16 um Achsen A₁ und A₂ drehbar gelagert, wobei die Achsrichtungen dieser Achsen A₁ und A₂ im Wesentlichen parallel zur Laufrichtung der Transportbänder der ersten Förderstrecke T₁ verlaufen. Um diese Umlenkrollen 16 sind Stellriemen 18 herumgeführt, welche nach dem Abheben der Werkstücke bzw. Werkstückträger von der ersten Förderstrecke T₁ angetrieben werden, um das Werkstück bzw. den Werkstückträger quer zur Laufrichtung der Transportbänder der ersten Förderstrecke T₁ zu bewegen und somit mit den Laufbändern der zweiten Förderstrecke T₂ in Eingriff zu bringen. Die Achsen A₁ und A₂ bilden zusammen eine erste Achse A im Sinne der vorliegenden Erfindung.

Zum Antrieb der Stellriemen 18 sind diese um Ritzel 20 herumgeführt, welche auf einer Achse B drehbar gelagert bzw. mit einer drehbaren Welle B drehfest verbunden sind. Auf dieser Achse bzw. Welle B ist ferner ein weiteres Ritzel 22 angeordnet, um das ein Antriebsriemen 24 herumgeführt ist. Der Antriebsriemen 24 kann mittels einer in Fig. 1 nicht dargestellten Antriebseinheit, beispielsweise eines Getriebemotors, angetrieben sein. Der Getriebemotor kann seinerseits von einer Steuereinheit aktiviert bzw. deaktiviert werden, die von geeigneten Sensoren der Position der Werkstücke bzw. Werkstückträger entsprechende Sensorsignale empfängt, und diese gemäß einem vorgegebenen Algorithmus verarbeitet.

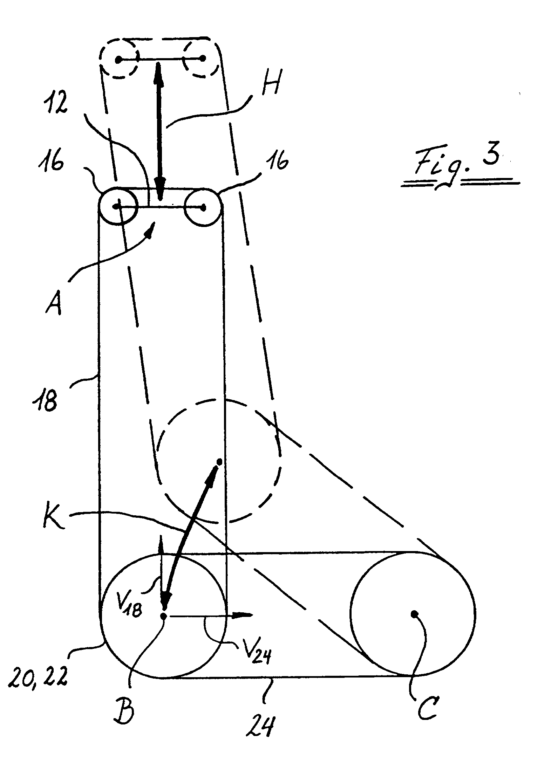

Da gemäß Fig. 1 die zu- und ablaufenden Trume 18a und 18b der Stellriemen 18 bzw. 24a und 24b des Antriebsriemens 24 im Wesentlichen parallel zueinander verlaufen, entspricht ihre Laufrichtung im Wesentlichen auch der Wirkungsrichtung der jeweiligen Vorspannkraft der Riemen 18 bzw. 24 (= Vorspannrichtung V₁₈ bzw. V₂₄; siehe Fig. 3).

Es sei bereits an dieser Stelle darauf hingewiesen, dass die Stellriemen 18 und der Antriebsriemen 24 vorzugsweise als Zahnriemen mit Glasfasereinlage ausgebildet sind. Hierdurch kann zum einen die gewünschte Präzision der Ansteuerung der Bewegung der Stellriemen 18 gewährleistet werden. Zum anderen zeichnen sich derartige im Wesentlichen längeninvariante Riemen durch eine hohe Haltbarkeit aus.

Nachzutragen ist noch, dass die Hubvorrichtung 14 über eine Basisplatte 26 mit einer (in Fig. 1 nicht dargestellten) übergeordneten Baugruppe fest verbunden ist. Des Weiteren erkennt man in Fig. 1 das Stellelement 28 eines Kraftgeräts der Hubvorrichtung 14 sowie zwei Führungsstangen 30, welche der Führung der Hubplatte 12 in Stellrichtung S dienen.

Die den Riemen 18 und 24 gemeinsame Achse B ist in einer Spannvorrichtung 32 gelagert, deren Aufbau und Funktion nachfolgend detailliert erläutert werden soll:

Die Spannvorrichtung 32 umfasst eine Grundplatte 34, die über die Führungsstangen 30 mit der Hubplatte 12 verbunden ist. Die Grundplatte 34 ist als gestanztes bzw. geschnittenes (beispielsweise mittels eines Lasers) und gebogenes Metallblechteil gefertigt. Insbesondere umfasst es drei Laschen, die aus der Blechebene gemäß der in Fig. 1 dargestellten Orientierung nach unten herausgebogen sind, nämlich zwei Führungsleisten 36 und einen Haltesteg 38 für eine Schraubendruckfeder 40. Des Weiteren umfasst die Spannvorrichtung 32 einen Träger 42, in welchem die Achse B gelagert ist. Der Träger 42 ist ebenfalls als gestanztes bzw. geschnittenes und gebogenes Blechteil gefertigt. Insbesondere sind die beiden, die Lagerausnehmungen 44 für die Achse B aufweisenden Bügelenden 42a aus der Blechebene gemäß der in Fig. 1 dargestellten Orientierung nach unten gebogen. In dem Basissteg 42b des Trägers 42 sind zwei Führungsausnehmungen 46 ausgebildet, welche von den Führungsleisten 36 der Grundplatte 34 durchsetzt sind. Die Schraubendruckfeder 40 stützt sich einenends an der Grundplatte 34 und andernends am Träger 42 ab und spannt somit sowohl die Stellriemen 18 als auch, wie nachfolgend noch näher erläutert werden wird, den Antriebsriemen 24 vor. Die Relativbewegung von Grundplatte 34 und Träger 42 wird durch einen Anschlag 38a begrenzt.

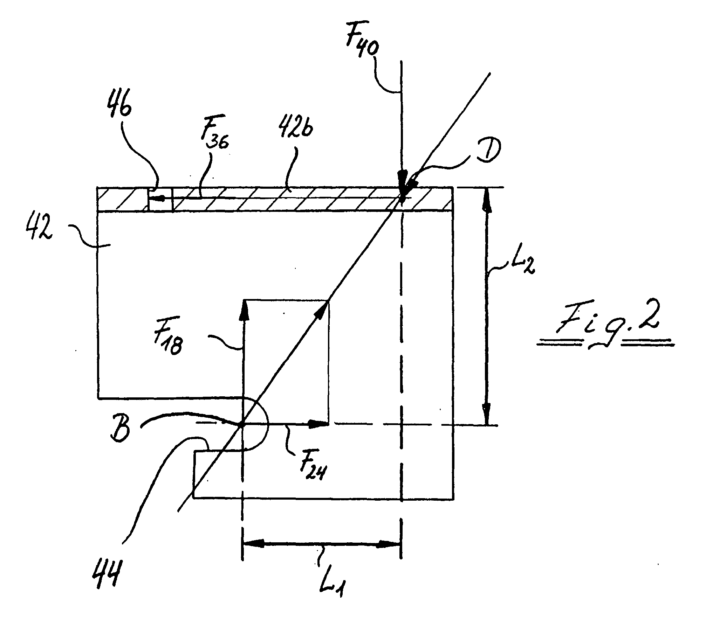

Zur Erläuterung der an dem Träger 42 angreifenden Kräfte sei auf die in Fig. 2 dargestellte schematische Seitenansicht des Trägers 42 verwiesen:

Wie vorstehend erwähnt, drängt die Feder 40 den Träger 42 mit einer Kraft F₄₀ nach unten. In Folge dieser Kraft F₄₀ werden die Stellriemen 18 gespannt, was die an der Achse B angreifende Gegenkraft F₁₈ erzeugt. Die Kraft F₁₈ führt zu einem Drehmoment M₁ um die Schwenkachse D (M₁ = F₁₈ x L₁). Dieses Drehmoment M₁ wird im stationären Zustand durch ein entsprechendes Gegenmoment M₂ ausgeglichen, welches von der Vorspannkraft F₂₄ des Antriebsriemens 24 herrührt (M₂ = F₂₄ x L₂). Die entsprechende Gegenkraft wird auf den Träger 42 durch die Führungsleisten 36 der Grundplatte 34 ausgeübt. Man sieht in diesem Zusammenhang leicht ein, dass es dabei auf die genaue Position der Führungsleisten 36 bzw. der Führungsausnehmungen 46 in der Ebene des Basisschenkels 42b des Trägers 42 nicht ankommt.

Die in Fig. 1 dargestellte Ausführungsform verfügt über zwei Stellriemen 18 und über einen Antriebsriemen 24. Um auch in diesem Fall unterschiedlicher Anzahl von Stellriemen 18 und Antriebsriemen 24 gewährleisten zu können, dass sämtliche Riemen 18 und 24 im Wesentlichen mit der gleichen Kraft vorgespannt werden, sollten die Längen L₁ und L₂ der Hebelarme der Vorspannkräfte F₁₈ und F₂₄ und die Anzahl der jeweiligen Riemensorte zueinander umgekehrt proportional sein. Bei einer Spannvorrichtung 32 für zwei Stellriemen 18 und einen Antriebsriemen, wie sie in Fig. 1 dargestellt ist, sollte die Länge L₁ des Hebelarms der Stellriemen 18 daher halb so groß gewählt werden wie die Länge L₂ des Hebelarms des Antriebsriemens 24. Es sei darauf hingewiesen, dass dieses Verhältnis in der Darstellung gemäß Fig. 2 nicht realisiert ist.

Nachzutragen ist noch, dass die Lagerausnehmung 44, in welcher die Achse B gelagert ist, einseitig offen ausgebildet ist. Gleichwohl ist die Achse B sicher in dieser Lagerausnehmung 44 gehalten, da weder die Vorspannkraft F₁₈ der Stellriemen 18 noch die Vorspannkraft F₂₄ des Antriebsriemens 24 eine aus dieser Ausnehmung 44 hinaus weisende Komponente besitzt. In der in den Figuren dargestellten Ausführungsform verlaufen die Stellriemen 18 und der Antriebsriemen 24 im Wesentlichen orthogonal zueinander.

Wird nun die Umsetzvorrichtung 10 betätigt, um ein Werkstück bzw. einen Werkstückträger von den Förderbändern der Förderstrecke T, abzuheben, d.h. wird die Hubvorrichtung 14 verlängert, um die Hubplatte 12 anzuheben, so wird auf Grund der Längeninvarianz der Stellriemen 18 auch die Achse B mit angehoben. Da die Antriebsachse C des Antriebsriemens 24 ortsfest angeordnet ist, und auch der Antriebsriemen 24 im Wesentlichen längeninvariant ausgebildet ist, führt die Achse B in dem einfachsten, in Fig. 3 skizzierten Fall beim Anheben der Hubplatte 12 eine Kreisbewegung K um die Antriebsachse C aus.

Um der Achse B diese Bewegung auch in der Praxis ermöglichen zu können, wird zunächst die gesamte Spannvorrichtung 32, genauer gesagt deren Grundplatte 34, über die Führungsstangen von der Hubplatte 12 mitgenommen. Ferner ermöglichen die Führungsleisten 36 und die Führungsausnehmungen 46 eine lineare Ausgleichsbewegung in Stellrichtung S. Schließlich sind die Führungsausnehmungen 46 verglichen mit dem Querschnitt der Führungsleisten 36 derart mit Übermaß bemessen, dass sich der Träger 42 nicht nur längs der Führungsleisten 36 linear nach oben bzw. unten bewegen kann, sondern auch um die Achse D verschwenken kann, ohne dass dabei die Gefahr eines Verkantens oder Blockierens der Führungsleisten 36 in den Führungsausnehmungen 46 bestünde. Wesentlich an dieser Schwenkbewegung ist, dass sie eine orthogonal zur Stellrichtung S verlaufende Komponente hat. Festzuhalten ist, dass lediglich die lineare und die schwenkende Ausgleichsbewegung zu einer Änderung der Vorspannung der Feder 40 führt.

Die Kreisbewegung K wird also durch eine Überlagerung einer linearen Mitnahmebewegung (in Stellrichtung S), sowie einer linearen (in Stellrichtung S) und einer schwenkenden (um die Achse D) Ausgleichsbewegung angenähert. Auf diese Weise braucht sich die Länge der Riemen 18 und 24 bei der Hubbewegung H der Hubplatte 12 nicht zu ändern. Lediglich die Vorspannung der Riemen 18 und 24 ändert sich in dem Maße, in dem auch die Federkraft der Feder 40 variiert. Diese Federkraftänderung ist aber aufgrund der Tatsache, dass sie nur von den Ausgleichsbewegungen hervorgerufen wird, nicht aber von der gesamten Bewegung der Grundplatte 34 der Spannvorrichtung 32, ohnehin gering, und kann zudem durch Einsatz einer vorgespannten Feder ohne Weiteres weiter minimiert werden.

## Patentansprüche

1. Vorrichtung (32) zum Spannen wenigstens zweier, im Wesentlichen längeninvarianter Riemen (18, 24),
wobei ein erster Riemen (18) um eine erste Achse (A) herumgeführt ist, welche wiederholt eine Stellbewegung in einer zur Achsrichtung der ersten Achse (A) im Wesentlichen orthogonal verlaufenden Stellrichtung (S) ausführt, und
wobei der erste Riemen (18) und ein zweiter Riemen (24) um eine gemeinsame zweite Achse (B) herumgeführt sind, wobei die Vorspannrichtungen (V₁₈, V₂₄) des ersten Riemens (18) und des zweiten Riemens (24) im Bereich der zweiten Achse (B) einen von 0° und 180° verschiedenen Winkel miteinander einschließen, **dadurch gekennzeichnet, dass** der zweiten Achse (B) eine Federeinheit (40) zugeordnet ist, welche sie im Sinne des Spannens des ersten Riemens (18) und des zweiten Riemens (24) vorspannt und welche bei einer Stellbewegung der ersten Achse (A) eine Ausgleichsbewegung der zweiten Achse (B) aus den durch die Achsrichtung der zweiten Achse (B) mit den Vorspannrichtungen (V₁₈, V₂₄) des ersten Riemens (18) und des zweiten Riemens (24) jeweils vor Beginn der Stellbewegung aufgespannten Ebenen heraus zulässt.

2. Spannvorrichtung nach Anspruch 1,
**dadurch gekennzeichnet, dass** die erste Achse (A) an einem relativ zu einer Basiseinheit (26) verstellbaren Rahmen (12/30) gelagert ist, und dass die zweite Achse (B) an einem Träger (42) gelagert ist, der an dem Rahmen (12/30) relativ zu diesem verlagerbar geführt ist, wobei die Federeinheit (40) einenends mittelbar oder unmittelbar an dem Rahmen (12/30) und andernends mittelbar oder unmittelbar an dem Träger (42) abgestützt ist.

3. Spannvorrichtung nach Anspruch 2,
**dadurch gekennzeichnet, dass** eine an dem Rahmen (12/30) befestigbare bzw. befestigte Grundplatte (34) der Spannvorrichtung oder/und der Träger (42) aus Blech, vorzugsweise Metallblech, gefertigt ist.

4. Spannvorrichtung nach einem der Ansprüche 1 bis 3,
**dadurch gekennzeichnet, dass** wenigstens ein Lager der zweiten Achse (B) als einseitig offene Ausnehmung (44) ausgebildet ist.

5. Spannvorrichtung nach einem der Ansprüche 2 bis 4,
**dadurch gekennzeichnet, dass** an einem (34) der Teile, Grundplatte oder Träger, wenigstens eine Führungsleiste (36) und am jeweils anderen Teil (42), Träger oder Grundplatte, jeweils eine zugehörige Führungsausnehmung (46) vorgesehen ist.

6. Spannvorrichtung nach Anspruch 5,
**dadurch gekennzeichnet, dass** die Führungsleiste (46) im Wesentlichen orthogonal zur Vorspannrichtung (V₂₄) des zweiten Riemens (24) vor Beginn der Stellbewegung verläuft, und dass die Führungsausnehmung (46) bezüglich der Abmessungen der sie durchsetzenden Führungsleiste (36) mit so großem Übermaß bemessen ist, dass der Träger (42) um eine zur zweiten Achse (B) im Wesentlichen parallel verlaufende Achse (D) verschwenkbar ist.

7. Spannvorrichtung nach einem der Ansprüche 1 bis 6,
**dadurch gekennzeichnet, dass** die Riemen (18, 24) eine Einlage aus zugfestem Material, insbesondere Glasfaser-Material, aufweisen.

8. Spannvorrichtung nach einem der Ansprüche 1 bis 7,
**dadurch gekennzeichnet, dass** die Riemen (18, 24) Zahnriemen sind.

9. Spannvorrichtung nach einem der Ansprüche 1 bis 8,
**dadurch gekennzeichnet, dass** die Federeinheit wenigstens eine Schraubendruckfeder (40) oder/und wenigstens eine Schraubenzugfeder oder/und wenigstens eine Gasfeder umfasst.

10. Spannvorrichtung nach einem der Ansprüche 1 bis 9,
**dadurch gekennzeichnet, dass** an der Grundplatte (34) oder/und dem Träger (42) ein Haltedorn (38) zum Halten der Schraubenfeder (40) vorgesehen ist.

11. Spannvorrichtung nach einem der Ansprüche 1 bis 10,
**dadurch gekennzeichnet, dass** an der Grundplatte (34) oder/und dem Träger (42) wenigstens ein Anschlag (38a) zur Begrenzung der Relativbewegung zwischen Grundplatte (34) und Träger (42) vorgesehen ist.

12. Spannvorrichtung nach einem der Ansprüche 1 bis 11,
**dadurch gekennzeichnet, dass** die Lage des Angriffs der Federeinheit (40) am Träger (42) relativ zur Lage der zweiten Achse (B) unter Berücksichtigung der Vorspannrichtungen (V₁₈, V₂₄) des wenigstens einen ersten Riemens (18) und des wenigstens einen zweiten Riemens (24) sowie unter Berücksichtigung der Anzahl erster Riemen (18) und der Anzahl zweiter Riemen (24) derart gewählt ist, dass die Vorspannkraft aller Riemen (18, 24) im Wesentlichen gleich groß ist.

13. Vorrichtung (10) zum Umsetzen von Werkstücken bzw. Werkstückträgern, umfassend eine Spannvorrichtung (32) nach einem der vorhergehenden Ansprüche.

## Claims

1. A device (32) for tensioning at least two belts (18,24) which are essentially invariable in length,
wherein a first belt (18) is guided about a first axis (A), which repeatedly performs an adjusting movement in an adjustment direction (S) that is substantially orthogonal to an axial direction of the first axis (A), and
wherein the first belt (18) and a second belt (24) are guided about a common second axis (B), wherein the pretensioning directions (V₁₈, V₂₄) of the first belt (18) and of the second belt (24) in a region of the second axis (B) together form a varying angle of between 0° and 180°, **characterised in that** the second axis (B) is associated with a spring unit (40) which prestresses it in the sense of the tensioning of the first belt (18) and of the second belt (24) and which, upon an adjusting movement of the first axis (A), permits a compensating movement of the second axis (B) from the planes defined by the axial direction of the second axis (B) with the pretensioning directions (V₁₈, V₂₄) of the first belt (18) and of the second belt (24), respectively, before initiation of the adjusting movement.

2. A tensioning device according to Claim 1, **characterised in that** the first axis (A) is supported on a frame (12/30) that is displaceable relative to a base unit (26), and that the second axis (B) is supported on a support (42) which is guided displaceably on the frame (12/30) relative thereto, wherein the spring unit (40) on a first end is braced directly or indirectly on the frame (12/30) and on a second end is braced directly or indirectly on the support (42).

3. A tensioning device according to Claim 2, **characterised in that** a base plate (34) of the tensioning device and/or the support (42), attachable or attached to the frame (12/30), is made from sheet, preferably sheet metal.

4. A tensioning device according to any one of Claims 1 to 3, **characterised in that** at least one mounting of the second axis (B) is formed as a recess (44) open on one side.

5. A tensioning device according to any one of Claims 2 to 4, **characterised in that**, on one of the parts, the base plate or the holder, at least one guide strip (36) is provided and on the respective other part (42), the support or the base plate, a respectively associated guide recess (46) is provided.

6. A tensioning device according to Claim 5, **characterised in that** the guide strip (46) [sic] runs substantially orthogonally to the pretensioning direction (V₂₄) of the second belt (24) before initiation of the adjusting movement, and that the guide recess (46), with reference to the dimensions of the ribbed strip (36), is designed with an oversize that is so large that the support (42) is pivotable about an axis (D) extending substantially parallel to the second axis (B).

7. A tensioning device according to any one of Claims 1 to 6, **characterised in that** the belts (18,24) have an insert made from a tension-resistant material, in particular, a glass-fibre material.

8. A tensioning device according to any one of Claims 1 to 7, **characterised in that** the belts (18,24) are toothed belts.

9. A tensioning device according to any one of Claims 1 to 8, **characterised in that** the spring unit includes at least one helical compression spring (40) and/or at least one helical tension spring and/or at least one gas spring.

10. A tensioning device according to any one of Claims 1 to 9, **characterised in that** a holding spindle (38) for holding the helical spring (40) is provided on the base plate (34) and/or on the support (42).

11. A tensioning device according to any one of Claims 1 to 10, **characterised in that** at least one stop (38a) for limiting relative movement between the base plate (34) and the support (42) is provided on the base plate (34) and/or on the support (42).

12. A tensioning device according to any one of Claims 1 to 11, **characterised in that** a position of the impact of the spring unit (40) on the support (42) relative to a position of the second axis (B) is selected taking into consideration the pretensioning directions (V₁₈,V₂₄) of the at least one first belt (18) and of the at least one second belt (24), as well as taking into consideration the number of first belts (18) and the number of second belts (24), wherein the pretensioning force of all belts (18,24) is essentially the same.

13. A device (10) for positioning work piece carriers, comprising a tensioning device (32) according to any one of the preceding Claims.

## Revendications

1. Dispositif (32) permettant de tendre au moins deux courroies (18, 24) de longueur substantiellement invariable,
une première courroie (18) étant amenée à passer autour d'un premier axe (A) qui exécute à plusieurs reprises un mouvement de réglage dans une direction de réglage (S) s'étendant de façon substantiellement perpendiculaire à la direction axiale du premier axe (A), et
la première courroie (18) et une deuxième courroie (24) étant amenées à passer autour d'un deuxième axe commun (B), les dispositifs de prétension (V₁₈, V₂₄) de la première courroie (18) et de la deuxième courroie (24) formant ensemble au niveau du deuxième axe (B) un angle différent de 0° et 180°,
**caractérisé en ce qu'**au deuxième axe (B), une unité de ressort (40) est affectée qui le prétend dans le sens de la tension de la première courroie (18) et de la deuxième courroie (24) et qui permet en cas de mouvement de réglage du premier axe (A) un mouvement de compensation du deuxième axe (B) hors des plans fixés par la direction axiale du deuxième axe (B) avec les dispositifs de prétension (V₁₈, V₂₄) de la première courroie (18) et de la deuxième courroie (24), respectivement avant le début du mouvement de réglage.

2. Dispositif de tension selon la revendication 1, **caractérisé en ce que** le premier axe (A) est logé sur un châssis réglable (12/30) par rapport à une unité de base (26), et **en ce que** le deuxième axe (B) est logé sur un support (42) qui est guidé le long du châssis (12/30) de façon à pouvoir se décaler par rapport à celui-ci, l'unité de ressort (40) prenant appui à une extrémité indirectement ou directement sur le châssis (12/30) et à l'autre extrémité indirectement ou directement sur le support (42).

3. Dispositif de tension selon la revendication 2, **caractérisé en ce qu'**une plaque de montage (34) pouvant être fixée ou fixée au châssis (12/30) du dispositif de tension ou/et le support (42) sont fabriqués en tôle, de préférence en tôle métallique.

4. Dispositif de tension selon l'une quelconque des revendications 1 à 3, **caractérisé en ce qu'**au moins un palier du deuxième axe (B) est réalisé comme un creux ouvert (44) d'un côté.

5. Dispositif de tension selon l'une quelconque des revendications 2 à 4, **caractérisé en ce que** sur l'une (34) des pièces, plaque de montage ou support, au moins une barrette de guidage (36) est prévue, et sur l'autre pièce (42) respective, support ou plaque de montage, respectivement un creux de guidage (46) associé est prévu.

6. Dispositif de tension selon la revendication 5, **caractérisé en ce que** la barrette de guidage (46) s'étend substantiellement perpendiculairement à la direction de prétension (V₂₄) de la deuxième courroie (24) avant le début du mouvement de réglage, et **en ce que** le creux de guidage (46) est surdimensionné en fonction des dimensions de la barrette de guidage (36) qui le traverse, à tel point que le support (42) est pivotant autour d'un axe (D) s'étendant substantiellement en parallèle au deuxième axe (B).

7. Dispositif de tension selon l'une quelconque des revendications 1 à 6, **caractérisé en ce que** les courroies (18, 24) présentent un insert en matériau résistant à la traction, en particulier un matériau à fibre de verre.

8. Dispositif de tension selon l'une quelconque des revendications 1 à 7, **caractérisé en ce que** les courroies (18, 24) sont des courroies dentées.

9. Dispositif de tension selon l'une quelconque des revendications 1 à 8, **caractérisé en ce que** l'unité de ressort comprend au moins un ressort de compression hélicoïdal (40) ou/et au moins un ressort de traction hélicoïdal ou/et au moins un ressort pneumatique.

10. Dispositif de tension selon l'une quelconque des revendications 1 à 9, **caractérisé en ce que** sur la plaque de montage (34) ou/et le support (42), un mandrin de maintien (38) est prévu pour maintenir le ressort hélicoïdal (40).

11. Dispositif de tension selon l'une quelconque des revendications 1 à 10, **caractérisé en ce que** sur la plaque de montage (34) ou/et le support (42), au moins une butée (38a) est prévue pour limiter le mouvement relatif entre la plaque de montage (34) et le support (42).

12. Dispositif de tension selon l'une quelconque des revendications 1 à 11, **caractérisé en ce que** la position de l'application de l'unité de ressort (40) sur le support (42) par rapport à la position du deuxième axe (B) est choisie en tenant compte des directions de prétension (V₁₈, V₂₄) de ladite au moins une première courroie (18) et de ladite au moins une deuxième courroie (24) ainsi qu'en tenant compte du nombre des premières courroies (18) et du nombre des deuxièmes courroies (24) de telle sorte que la force de prétension de toutes les courroies (18, 24) est substantiellement identique.

13. Dispositif (10) permettant de déplacer des pièces à travailler ou des porte-outil, comprenant un dispositif de tension (32) selon l'une quelconque des revendications précédentes.
